# EUROPÄISCHE PATENTANMELDUNG

(11) **EP 2 308 625 A1**
(43) Veröffentlichungstag der Anmeldung: **13.04.2011**
(21) Anmeldenummer: 10174866.3
(22) Anmeldetag: 01.09.2010
(51) Int. Cl.: B23D 15/06, B23D 21/08, B21D 28/16

(54) **Verfahren und Vorrichtung zum versprödungsfreien Schneiden eines metallischen Werkstoffs**

(30) Priorität: 09.10.2009 DE 102009048858
(71) Anmelder: Bayerische Motoren Werke Aktiengesellschaft, 80809 München (DE)
(72) Erfinder: Dr.Meinhardt, Josef, 80939, Muenchen (DE); Illig, Robert, 84183, Niederviehbach (DE); Schmid, Harald, 80801, Muenchen (DE); Wittmann, Isa, 21075, Hamburg (DE)

(57) **Zusammenfassung**

Die Erfindung betrifft ein Verfahren zum Schneiden eines metallischen Werkstoffs (10), wobei der zu schneidende metallische Werkstoff in einem Schneidvorgang entlang einer definierten Schnittlinie (12) getrennt wird. Um eine Versprödung an der Schnittkante zu vermeiden ist vorgesehen, dass der zu schneidende metallische Werkstoff (10) vor dem Schneidvorgang zumindest im Bereich (H) einer Schnittlinie (12, 13) erwärmt wird, so dass der metallische Werkstoff zumindest in diesem Bereich während des nachfolgenden Schneidvorgangs eine erhöhte Temperatur aufweist.

Die Erfindung betrifft ferner eine korrespondierende Schneidvorrichtung und eine bevorzugte Verwendung des Verfahrens und/oder dieser Schneidvorrichtung.

## Beschreibung

Die Erfindung betrifft ein Verfahren und eine Vorrichtung zum Schneiden eines metallischen Werkstoffs gemäß den jeweiligen Oberbegriffen der unabhängigen Ansprüche.

Verfahren und Vorrichtungen zum Schneiden metallischer Werkstoffe sind aus dem Stand der Technik bekannt. Stellvertretend wird hierzu verwiesen auf: Schuler-Handbuch der Umformtechnik, von 1996.

Beim Schneiden metallischer Werkstoffe kann es an den Schnittkanten oder im Bereich der Schnittkanten zu einer Versprödung des metallischen Werkstoffs kommen. Besonders betroffen sind hiervon metallische Werkstoffe, bei denen eine Formänderung eine verformungsinduzierte Gefügeumwandlung bewirken kann, wie dies z. B. bei TRIP-Stählen der Fall ist (so genannter TRIP-Effekt). Problematisch ist, dass derartige Versprödungen Rissinitiatoren für so genannte Kantenrisse sein können.

Eine Aufgabe der Erfindung ist es, Möglichkeiten zum versprödungsfreien Schneiden eines metallischen Werkstoffs aufzuzeigen.

Diese Aufgabe wird gelöst durch ein Verfahren mit den Merkmalen des Anspruchs 1. Diese Aufgabe wird ferner gelöst durch eine Schneidvorrichtung mit den Merkmalen des ersten nebengeordneten Anspruchs. Die jeweils abhängigen Ansprüche betreffen vorteilhafte und bevorzugte Weiterbildungen. Gemäß einem zweiten nebengeordneten Anspruch erstreckt sich die Lösung der Aufgabe auch auf eine bevorzugte Verwendung des erfindungsgemäßen Verfahrens und/oder der erfindungsgemäßen Schneidvorrichtung.

Das erfindungsgemäße Verfahren dient zum Schneiden eines metallischen Werkstoffs, bei dem der zu schneidende metallische Werkstoff in einem Schneidvorgang entlang wenigstens einer definierten Schnittlinie getrennt wird. Erfindungsgemäß ist vorgesehen, dass der zu schneidende metallische Werkstoff vor dem Schneidvorgang zumindest im Bereich einer Schnittlinie erwärmt wird, so dass der metallische Werkstoff zumindest in diesem Bereich während des nachfolgenden Schneidvorgangs eine erhöhte Temperatur aufweist.

Die Erfindung beruht auf der Erkenntnis, dass eine Versprödung oder auch partielle Versprödungen des metallischen Werkstoffs an der Schnittkante (hierunter wird vorrangig die ausgebildete Schnittfläche im metallischen Werkstoff entlang der Schnittlinie verstanden) und ggf. auch der an diese Schnittkante angrenzenden Werkstoffbereiche wirkungsvoll verhindert oder zumindest deutlich reduziert werden kann, wenn der zu schneidende metallische Werkstoff beim Schneidvorgang im Bereich der Schnittlinie bzw. im Bereich der Schnittführung eine erhöhte Temperatur aufweist. Hierdurch kann insbesondere auch eine verformungsinduzierte Gefügeumwandlung unterbunden werden, die für die Versprödung der Schnittkante maßgeblich sein kann.

Unter einer "erhöhten Temperatur" wird eine Temperatur des metallischen Werkstoffs verstanden, die deutlich oberhalb der Ausgangstemperatur vor dem Erwärmen liegt. Die Ausgangstemperatur vor dem Erwärmen ist z. B. die umgebende Raumtemperatur.

Die Formulierung "im Bereich der Schnittlinie" (im folgenden auch als "betreffender Bereich" bezeichnet) ist im Rahmen der Erfindung umfassend auszulegen. Unter einem solchen Bereich wird insbesondere ein Bereich bzw. eine Zone verstanden, welche zumindest eine Schnittlinie vollständig einschließt. Ein solcher Bereich kann aber auch nur wenigstens einen Schnittlinienabschnitt einschließen. Im Rahmen der Erfindung kann ein Bereich auch mehrere Teilbereiche umfassen, die jeweils wenigstens eine Schnittlinie oder wenigstens einen Schnittlinienabschnitt einschließen. Bevorzugt ist vorgesehen, dass ein solcher Bereich die Werkstoffbereiche beidseitig der Schnittlinie mit einschließt, was wenige Millimeter bis hin zu mehreren Zentimetern umfassen kann. Hierdurch kann, wegen des nicht vorhandenen Temperaturgefälles, beim Erwärmen oder nach dem Erwärmen ein Wärmeabfluss von der Schnittlinien in die angrenzenden Werkstoffbereiche reduziert werden.

Erfindungsgemäß soll das Erwärmen vor dem Schneidvorgang erfolgen. Hierdurch wird sichergestellt, dass ein betreffender Bereich bereits zu Beginn des Schneidvorgangs eine ausreichend hohe Temperatur aufweist, was insbesondere im Hinblick auf hohe Schnittgeschwindigkeiten und/oder hohe Vorschubgeschwindigkeiten bei automatisierten Fertigungsabläufen vorteilhaft ist. Bevorzugt erfolgt das Erwärmen unmittelbar vor dem Schneidvorgang. Hierunter ist zu verstehen, dass zwischen dem Erwärmen und dem Schneidvorgang keine weiteren Bearbeitungsschritte vorgesehen sind, mit Ausnahme eines etwaigen Vorschubs bzw. Weitertransports des zu schneidenden metallischen Werkstoffs, z. B. innerhalb einer Fertigungslinie.

Gemäß einer bevorzugten Weiterbildung ist vorgesehen, dass der zu schneidende metallische Werkstoff großflächig oder ganzflächig erwärmt wird. So kann z. B. eine Einzelplatine vollständig oder ein Blechband über seine gesamte Breite erwärmt werden. Dies ist insbesondere bei kleineren Abmessungen vorteilhaft.

Gemäß einer anderen bevorzugten Weiterbildung ist hingegen vorgesehen, dass der metallische Werkstoff vor dem Schneidvorgang lokal im Bereich einer Schnittlinie erwärmt wird, so dass der metallische Werkstoff in diesem Bereich während des nachfolgenden Schneidvorgangs eine lokal erhöhte Temperatur, insbesondere bezüglich der anderen Werkstoffbereiche, aufweist. Eine solche lokale Erwärmung sollte zumindest jene Schnittlinienabschnitte betreffen, die aufgrund einer nachfolgenden Belastung bezüglich einer Rissinitiierung besonders empfindlich sind. Idealerweise sollte der betreffende Bereich klein gewählt werden, um z. B. die in den metallischen Werkstoff einzubringende Energiemenge gering zu halten und um eine Temperaturregelung zu vereinfachen.

Gemäß einer bevorzugten Weiterbildung ist vorgesehen, dass der zu schneidende metallische Werkstoff ein Blechwerkstoff ist. Gleichwohl ist die Erfindung nicht auf einen Blechwerkstoff beschränkt. Die bevorzugte Blechdicke liegt in einem für den Kraftfahrzeugbau und insbesondere für den Karosseriebau typischen Bereich von 0,7 bis 3,0 mm (Feinblech).

Insbesondere ist vorgesehen, dass es sich bei dem Blechwerkstoff um einen TRIP-Stahlblechwerkstoff handelt. Bei einem TRIP-Stahl wird bei einer plastischen Formänderung aufgrund des TRIP-Effekts zumindest ein Anteil des enthaltenen Austenit-Gefüges in ein härteres und weniger duktiles Martensit-Gefüge umgewandelt (so genannte verformungsinduzierten Martensitbildung), was in der Folge für eine Rissinitiierung ursächlich sein kann. Aufgrund der erfindungsgemäßen Erwärmung wird eine solche Martensitbildung an der Schnittkante verhindert oder zumindest deutlich reduziert. Dies gilt prinzipiell für alle metallischen Werkstoffe, bei denen eine verformungsinduzierte Gefügeumwandlung (evtl. auch nur eines Gefügebestandteils) von einem weichen und duktilen zu einem harten und weniger duktilen bzw. spröden Gefüge eintreten kann. Solche Effekte sind z. B. auch bei einigen Edelstählen und anderen Mehrphasenstählen (z. B. Dualphasenstähle) bekannt.

Gemäß einer bevorzugten Weiterbildung ist vorgesehen, dass der Schneidvorgang ein Scherschneiden ist. Im Gegensatz bspw. zum Zersägen oder Beißschneiden erfolgt beim Scherschneiden das Zerteilen des metallischen Werkstoffes durch zwei sich aneinander vorbeibewegende Schneiden. Der metallische Werkstoff wird hierbei durch Scherkräfte abgeschert. Bevorzugt erfolgt das Scherschneiden mittels von Scherschneidemessern oder Rollenschneidemessern, die mit einem korrespondierenden Gegenmesser (wie bspw. einer Matrize) zusammenwirken. Die Erfindung führt in vorteilhafter Weise auch zu einer Verschleißreduzierung an den Schneidmessern und damit zu einer Reduzierung der Instandhaltungskosten.

Gemäß einer bevorzugten Weiterbildung ist vorgesehen, dass der zu schneidende Blechwerkstoff eben ist. Bei der Schnittlinie handelt es sich demnach um eine zweidimensionale Schnittlinie, mit einer offenen oder einer geschlossenen Schnittkontur, die ggf. auch komplex ausgebildet sein kann.

Bei diesem Schneidvorgang handelt es sich z. B. um ein Trennschneiden zum Abtrennen einer Einzelplatine von einem Blechband. Bevorzugt handelt es sich bei diesem Schneidvorgang um ein Zuschneiden eines zur anschließenden Umformung vorgesehenen Platinenzuschnitts aus einem Blechband oder aus einer Einzelplatine. Ein solches Zuschneiden kann mehrere Schnittlinien mit offenen und/oder geschlossenen Schnittkonturen umfassen, die bevorzugt im Wesentlichen zeitgleich eingebracht werden. Insbesondere im Hinblick auf eine nachfolgende Umformung ist wichtig, dass beim Schneidvorgang am Platinenzuschnitt (Schnittteil) keine Versprödung an einer Schnittkante eintritt, was in der nachfolgende Umformung des Blechwerkstoffs zu Kantenrissen führen kann, die an der spröden Schnittkante initiiert werden und sich von dort in den Blechwerkstoff hinein ausbreiten, was zu einem Ausschussteil führt. Durch die Erfindung wird demzufolge die Kantenrissempfindlichkeit an einer Schneidkante reduziert, wodurch beim nachfolgenden Umformen die Ausschussrate erheblich gesenkt wird. Ferner wird in einem nachfolgenden Umformprozess eine Steigerung des Umformgrades erreicht. Ebenso ist es möglich, kleinere Platinenzuschnitte zu verwenden. Bevorzugt erfolgt das Zuschneiden mittels einer Schneidvorrichtung, wobei es sich z. B. um ein pressengebundenes Schneidwerkzeug (Formschneidwerkzeug) handeln kann.

Gemäß einer bevorzugten Weiterbildung ist vorgesehen, dass der zu schneidende Blechwerkstoff vor dem Schneidvorgang bereits zu einem Blechformteil umgeformt wurde. Bei der Schnittlinie handelt es sich demnach bevorzugt um eine dreidimensionale Schnittlinie, mit einer offenen oder einer geschlossenen Schnittkontur, die ggf. auch komplex ausgebildet sein kann.

Bei diesem Schneidvorgang handelt es sich bevorzugt um ein Beschneiden. Das Beschneiden ist das Fertigschneiden eines Blechformteils nach der Umformung auf dessen genauen Abmessungen. Insbesondere im Hinblick auf die nachfolgende Verwendung des Blechformteils, z. B. als sicherheitsrelevantes Bauteil in einem Kraftfahrzeug, ist wichtig, dass beim Schneidvorgang am Blechformteil (Schnittteil) keine Versprödung an einer Schnittkante eintritt, was in der nachfolgenden Verwendung zu Kantenrissen führen kann, die an der spröden Schnittkante initiiert werden und sich von dort in den Blechwerkstoff hinein ausbreiten, was zu einem Versagen des Bauteils führt. Bevorzugt erfolgt das Beschneiden mittels einer Schneidvorrichtung, wobei es sich z. B. um ein pressengebundenes Schneidwerkzeug (Beschnittwerkzeug) handeln kann.

Gemäß einer bevorzugten Weiterbildung ist vorgesehen, dass die erhöhte und insbesondere lokal erhöhte Temperatur im betreffenden Bereich beim Schneidvorgang zwischen 50 °C und 150 °C, bevorzugt zwischen 70 °C und 130 °C und insbesondere zwischen 90 °C und 110 °C liegt. E in unterer Grenzwert richtet sich z. B. danach, ab welcher Temperatur eine verformungsinduzierte Gefügeumwandlung unterbunden werden kann. Ein oberer Grenzwert richtet sich z. B. danach, ab welcher Temperatur eine Beeinträchtigung einer Schmierstoffbeschichtung gegeben ist.

Gemäß einer bevorzugten Weiterbildung ist vorgesehen, dass der zu schneidende metallische Werkstoff beim Erwärmen (zumindest) in dem betreffenden Bereich auf eine Temperatur erwärmt wird, die oberhalb der erhöhten und insbesondere oberhalb der lokal erhöhten Temperatur beim Schneidvorgang liegt. Dies kann als Übererwärmung bezeichnet werden. Das Maß der Übererwärmung richtet sich z. B. nach der Zeitspanne zwischen dem Erwärmen und dem Schneidvorgang und der Abkühlung durch Umgebungseinflüsse innerhalb dieser Zeitspanne, sowie dem Wärmeleitvermögen und der Wärmekapazität des zu schneidenden metallischen Werkstoffs. Dies ist keine abschließende Aufzählung. Die zuvor erläuterten Grenzwerte sind hierbei zu berücksichtigten.

Gemäß einer bevorzugten Weiterbildung ist vorgesehen, dass die Temperaturhaltezeit, innerhalb derer der betreffende Bereich des metallischen Werkstoffs eine erhöhte und insbesondere lokal erhöhte Temperatur aufweist, möglichst kurz gewählt bzw. eingestellt wird. Hierdurch soll die Gefahr einer Festigkeitssteigerung infolge eines etwaigen Bake-Hardening-Effekts (oder ähnlicher Effekte) möglichst gering gehalten werden. Insbesondere auch im Hinblick auf einen solchen Bake-Hardening-Effekt sollte die zuvor erläuterte Übererwärmung nicht zu hoch, und im Übrigen auch ausreichend kurz, angesetzt werden, um einen großen Abstand zur Bake-Hardening-Temperatur zu erhalten und auch eine schnelle Abkühlung des zu schneidenden metallischen Werkstoffs zu ermöglichen.

Gemäß einer bevorzugten Weiterbildung ist vorgesehen, dass der betreffende Bereich des metallischen Werkstoffs nach dem Schneidvorgang, oder zumindest nach Verlassen der Schneidvorrichtung, keine erhöhte und insbesondere keine lokal erhöhte Temperatur mehr aufweist. D. h. ein betreffender Bereich sollte, wie auch die anderen Werkstoffbereiche, in etwa wieder die Ausgangstemperatur (z. B. Raumtemperatur) aufweisen. Dies kann durch die beim Erwärmen in den metallischen Werkstoff eingebrachte Energiemenge und insbesondere lokal eingebrachte Energiemenge eingestellt werden, unter Berücksichtigung von Abkühlungseffekten durch die Umgebung und die Schneidvorrichtung (z. B. Abkühlung durch Schneidmesser), sowie dem Wärmeleitvermögen und der Wärmekapazität des zu schneidenden metallischen Werkstoffs (keine abschließende Aufzählung).

Gemäß einer bevorzugten Weiterbildung ist daher vorgesehen, dass der betreffende Bereich des metallischen Werkstoffs nach dem Schneidvorgang gezielt gekühlt wird, was z. B. mittels eines Gebläses oder einer in der Schneidvorrichtung integrierten Kühleinrichtung erfolgen kann.

Die erfindungsgemäße Schneidvorrichtung umfasst eine Schneideinrichtung wie insbesondere ein Schneidwerkzeug zum Schneiden eines metallischen Werkstoffs, wobei der zu schneidende metallische Werkstoff mittels dieser Schneidvorrichtung in einem Schneidvorgang entlang wenigstens einer definierten Schnittlinie getrennt wird, und wobei die Schneidvorrichtung ferner wenigstens eine Erwärmungseinrichtung umfasst, mittels derer der zu schneidende metallische Werkstoff vor dem Schneidvorgang zumindest im Bereich einer Schnittlinie erwärmbar ist. Somit weist zumindest dieser und insbesondere nur dieser mittels der Erwärmungseinrichtung erwärmte Bereich (bzw. der metallische Werkstoff in diesem Bereich) während dem nachfolgenden bzw. sich anschließenden Schneidvorgang eine erhöhte und insbesondere lokal erhöhte Temperatur auf.

Den zuvor erläuterten Verfahrensmerkmalen entsprechen sinngemäße Vorrichtungsmerkmale und umgekehrt. Die erfindungsgemäße Schneidvorrichtung ist vorrangig zur Durchführung des erfindungsgemäßen Verfahrens vorgesehen.

Bevorzugt ist die erfindungsgemäße Schneidvorrichtung in eine automatisierte Fertigungslinie eingebunden und wird hierin taktgesteuert betrieben. Die Schneidvorrichtung kann in einer solchen Fertigungslinie z. B. zur Erzeugung von Platinenzuschnitten für eine anschließende Umformung vorgesehen sein (z. B. mit 30 bis 60 Teilen pro Minute). Ebenso kann die Schneidvorrichtung in einer solchen Fertigungslinie zum Beschneiden von Blechformteilen nach der Umformung vorgesehen sein (z. B. mit bis zu 8 Teilen pro Minute bei Großpressteilen). Die Erwärmungseinrichtung ist innerhalb einer solchen Fertigungslinie bevorzugt derart angeordnet, dass unmittelbar im Anschluss an das Erwärmen der Schneidvorgang ausführbar ist. In einfacher Weise kann dies z. B. dadurch erfolgen, dass der zu schneidende metallische Werkstoff direkt am Schneidort zunächst erwärmt und nachfolgend der Schneidvorgang ausgeführt wird. Bei kürzeren Taktzeiten kann es hingegen sinnvoller sein, zwischen dem Erwärmungsvorgang und dem Schneidvorgang einen taktgebundenen und insbesondere automatisierten Transfer vorzusehen. Gerade hierbei ist jedoch eine Abkühlung des erwärmten zu schneidenden metallischen Werkstoffs während des Transfers zu berücksichtigen, weshalb ggf. Zusatzmaßnahmen zu ergreifen sind (bspw. thermische Abschirmungen).

Gemäß einer besonders bevorzugten Weiterbildung ist vorgesehen, dass die Erwärmungseinrichtung in das Schneidwerkzeug integriert ist. Dies wird nachfolgend im Zusammenhang mit den Figuren noch näher erläutert. Dies bietet die Vorteile, dass beim Umrüsten keine Zusatzzeiten zum Wechsel der Erwärmungseinrichtung anfallen und dass die Taktzeit nicht beeinträchtigt wird. Bevorzugt handelt es sich bei diesem Schneidwerkzeug um ein Platinenschnittwerkzeug für einen Blechwerkstoff zur Erzeugung eines Platinenzuschnitts vor der Umformung.

Gemäß einer bevorzugten Weiterbildung ist vorgesehen, dass die Erwärmungseinrichtung eine induktive Heizeinrichtung ist. Mittels einer solchen induktiven Heizeinrichtung kann in kurzer Zeit zielgerichtet ein direktes (d. h. die Erwärmung entsteht direkt im zu schneidenden metallischen Werkstoff) oder auch indirektes Erwärmen des betreffenden Bereichs bewerkstelligt werden, wobei es sich insbesondere um ein lokales Erwärmen handelt.

Anstelle einer induktiven Heizeinrichtung kann auch eine Widerstandsheizeinrichtung (z. B. Heizpatrone) vorgesehen sein. Um einen betreffenden Bereich zu erwärmen kann alternativ auch ein konduktives Erwärmen (unmittelbare Widerstanderwärmung z. B. mit Hochfrequenzstrom), ein Erwärmen mittels Energiestrahlung (z. B. thermische Strahlung, Laserstrahlung, Infrarotstrahlung, Plasmastrahlung, Mikrowelle, usw.), ein konvektives Erwärmen (z. B. Heißluftgebläse) oder ein Erwärmen im Ofen (z. B. Erwärmung im Durchlaufofen) vorgesehen sein. Dies ist keine abschließende Aufzählung. Wichtig ist die Effizienz der gewählten Erwärmungsmethode, so dass beim Schneidvorgang eine optimale Temperatur an der Schnittlinie gegeben ist.

Gemäß einer bevorzugten Weiterbildung ist vorgesehen, dass die Schneidvorrichtung eine Steuereinrichtung für die Erwärmungseinrichtung umfasst. Mittels dieser Steuereinrichtung wird die Temperatur des betreffenden zu erwärmenden Bereichs und/oder die eingebrachte Energiemenge geregelt und bevorzugt auch gesteuert. Ergänzend können hierzu in der Schneidvorrichtung Temperatursensoren angeordnet sein.

Bevorzugt ist die Verwendung des erfindungsgemäßen Verfahrens und/oder der erfindungsgemäßen Schneidvorrichtung zur Serienfertigung von Blechformteilen aus einem Stahlblechwerkstoff für Kraftfahrzeuge, insbesondere im Karosseriebereich, vorgesehen. Der verwendete Stahlblechwerkstoff ist insbesondere ein höherfester oder hochfester Stahlblechwerkstoff, wie bspw. ein Trip-Stahlblechwerkstoff.

Die Erfindung wird nachfolgend anhand der Figuren beispielhaft näher erläutert. Es zeigen:
- Fig. 1: in mehreren Teilbildern ein zu schneidendes Blechband in einer schematischen Draufsicht; und
- Fig. 2: in zwei Teilbildern zwei bevorzugte Ausführungsformen einer erfindungsgemäßen Schneidvorrichtung.

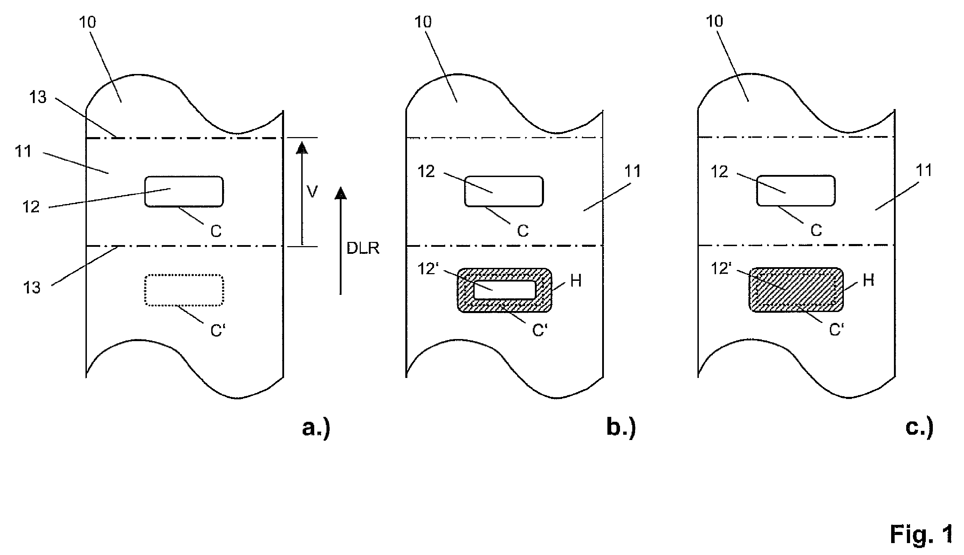

Fig. 1a zeigt in einer Draufsicht einen Abschnitt eines Blechbands 10, wobei es sich z. B. um einen TRIP-Stahlblechwerkstoff (bspw. TRIP 700) in einer für den Karosseriebau gängigen Blechdicke handelt. Von dem Blechband 10 werden einzelne Platinenzuschnitte 11 herausgetrennt, die anschließend umgeformt werden. In dem gezeigten Beispiel wird ein Platinenzuschnitt 11 durch einen Ausschnitt 12 mit einer geschlossenen Schnittkontur und zwei begrenzende Trennschnitten 13 gebildet. Hierzu durchläuft das Blechband 10 taktweise eine pressengebundene Schneidvorrichtung in der angegebenen Durchlaufrichtung DLR. Der taktweise Vorschub ist mit V angegeben.

Beispielhaft erweist sich insbesondere eine durch den Schneidvorgang hervorgerufene Versprödung an der zum Platinenzuschnitt 11 (Schnittteil) gehörenden Schneidkante der Schnittlinie C des Ausschnitts 12 als kritisch. In der nachfolgenden Umformung kann diese Versprödung Rissinitiator für sich in das herzustellende Blechformteil ausbreitende Risse sein, was zu Ausschuss führt. Eine Versprödung an der korrespondierenden Schneidkante des Schneidabfalls (Innenfläche der Schnittlinie C) ist bezüglich einer Kantenrissempfindlichkeit in der Regel unkritisch. Gleichwohl trägt diese zu einem ungünstigen Verschleiß an den Schneidmessern bei.

Es wird daher vorgeschlagen, vor dem Schneidvorgang, d. h. vor dem Ausschneiden des Ausschnitts 12, den Blechwerkstoff des Blechbands 10 im Bereich der Schnittlinie C zu erwärmen, so dass dieser Bereich während des nachfolgenden Schneidvorgangs eine lokal erhöhte Temperatur aufweist, wodurch die Versprödung unterbunden werden kann, wie oben erläutert.

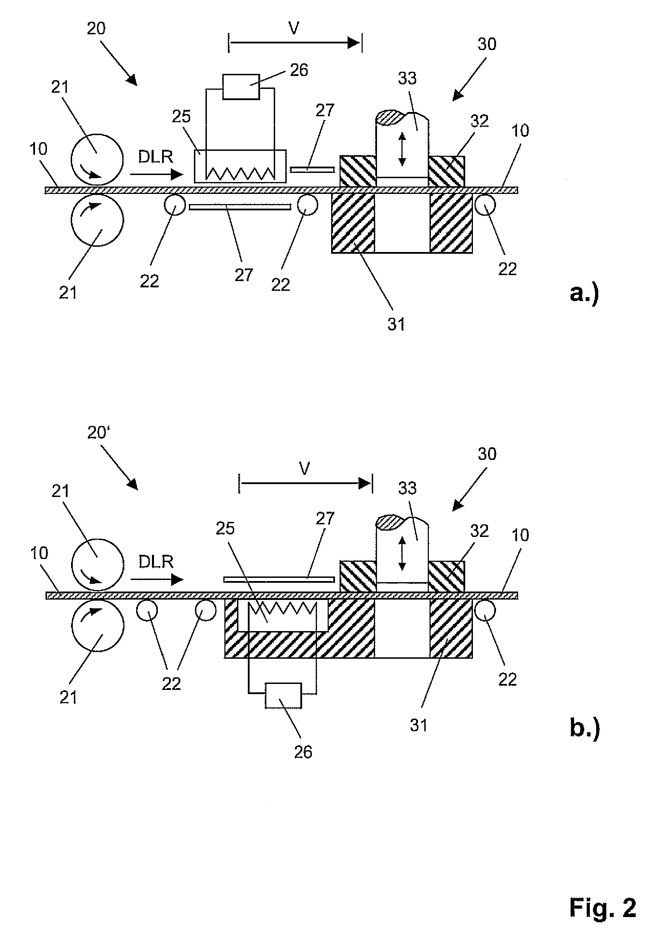

Das Erwärmen des Blechwerkstoffs im Bereich der Schnittlinie C erfolgt ebenfalls taktweise um den Vorschub V vorgelagert, unmittelbar vor Einbringen des Ausschnitts 12. Dies ist schematisch in den Fig. 1b und 1c gezeigt. Gemäß Fig. 1b wird nur ein kleiner, die Schnittlinie C umgebender Bereich H (schraffiert dargestellt) entlang der gesamten vorgesehenen Schnittlinie C' erwärmt, wobei dieser Bereich beidseitig über die vorgesehene Schnittlinie C' übersteht. Ebenso ist es möglich, die vorgesehene Schnittlinie C' nur in einem oder mehreren kritischen Abschnitten zu erwärmen. Gemäß Fig. 1c wird ein Bereich H erwärmt, der den gesamten vorgesehenen Ausschnitt 12' abdeckt und dabei über die vorgesehene Schnittlinie C' hinausragt. Der Schneidabfall des Ausschnitts 12 (entspricht der Innenfläche der Schnittlinie C) kann in unschädlicher Weise als Wärmspeicher genutzt werden. Das erfindungsgemäße Verfahren wird nachfolgend im Zusammenhang mit der Fig. 2 näher erläutert.

Fig. 2a zeigt in einer schematischen Seiteansicht eine insgesamt mit 20 bezeichnete Schneidvorrichtung die beispielhaft lediglich zum Einbringen des Ausschnitts 12 vorgesehen ist. (Die Trennschnitte 13 werden z. B. in einer separaten Schneidvorrichtung eingebracht, wobei die gezeigte Schneidvorrichtung 20 hierfür auch erweitert werden kann). Das Blechband 10 durchläuft die Schneidvorrichtung 20 in der angegebenen Durchlaufrichtung DLR und wird hierbei von den Antriebswalzen 21 taktweise vorgeschoben. Anstelle des Blechbandes 10 können auch Einzelplatinen vorgesehen sein. Der taktweise Vorschub des Blechbands 10 ist mit V angegeben. Die Schneidvorrichtung 20 umfasst mehrere Stützrollen 22 für das Blechband 10.

Zur Schneidvorrichtung 20 gehört eine taktweise arbeitende, als Schneidwerkzeug 30 ausgebildete Schneideinrichtung, mittels derer der Ausschnitt 12 in einem Schneidvorgang in den Blechwerkstoff des Blechbands 10 eingebracht wird. Zum Schneidwerkzeug 30 gehören eine Matrize 31, ein Niederhalter 32 und ein Schnittstempel 33. Der Schnittstempel 33 und die Matrize 31 bilden eine Schneidmesserpaarung, mittels derer in bekannter Weise ein Scherschneidvorgang ausgeführt wird. Das Schneidwerkzeug 30 ist z. B. in einer nicht dargestellten Schneidpresse eingebaut.

Der Blechwerkstoff des Blechbands 10 wird vor Eintritt in dass Schneidwerkzeug 30 im Bereich der vorgesehenen Schnittlinie (siehe Fig. 1b und 1c) mittels einer induktiven Heizeinrichtung 25 taktweise erwärmt, wobei der erwärmte Bereich im nächsten Vorschub V in das Schneidwerkzeug 30 gelangt, so dass der Blechwerkstoff im Bereich der Schnittlinie eine lokal erhöhte Temperatur aufweist. Die lokal erhöhte Temperatur beträgt bspw. 50 °C bis 150 °C. Um eine Abkühlung des Blechwerkstoffs zu vermeiden sind Abschirmungen 27 vorgesehen.

Die induktive Heizeinrichtung 25 kann z. B. als formangepasster Flächeninduktor mit einem Spulensystem ausgebildet sein. Die induktive Heizeinrichtung 25 wird von einer Steuereinrichtung 26 gesteuert. Um erforderlichenfalls eine schnelleres Erwärmen des Blechwerkstoffs zu erreichen, bspw. bei kurzen Taktzeiten in der Serienfertigung, kann gegenüberliegend beidseitig des Blechwerkstoffs jeweils eine induktive Heizeinrichtung angeordnet werden. Eine einfache Möglichkeit besteht auch darin, die Erwärmungseinrichtung in dem Niederhalter 32 vorzusehen und diesen dem Schneidstempel 33 vorauseilend auf den Blechwerkstoff aufzusetzen.

In gleicher Weise können offene Schnittkonturen und/oder Trennschnitte in einen Blechwerkstoff eingebracht werden. Ebenso können auch mehrere Schneidvorgänge gleichzeitig oder im Wesentlichen gleichzeitig ausgeführt werden. In vergleichbarer Weise können im Übrigen auch dreidimensionale Schnittlinien realisiert werden, um z. B. ein fertig umgeformtes Blechformteil zu beschneiden.

Bei der in Fig. 2a gezeigten Ausführungsform einer Schneidvorrichtung 20 ist die induktive Heizeinrichtung 25 als separate Erwärmungsstation bzw. als separates Modul ausgebildet. Fig. 2b zeigt eine Ausführungsform einer Schneidvorrichtung 20', bei der die induktive Heizeinrichtung 25 in das Unterwerkzeug des Schneidwerkzeugs 30 integriert ist. Hierdurch können z. B. Rüstzeiten minimiert werden.

### Bezugszeichenliste

### Verfahren und Vorrichtung zum versprödungsfreien Schneiden eines metallischen Werkstoffs

- 10: Blechband
- 11: Platinenschnitt
- 12: Ausschnitt
- 12': vorgesehener Ausschnitt
- 13: Trennschnitt
- 20, 20': Schneidvorrichtung
- 21: Antriebswalze
- 22: Stützrollen
- 25: Heizeinrichtung
- 26: Steuereinrichtung
- 27: Abschirmung
- 30: Schneidwerkzeug
- 31: Matrize
- 32: Niederhalter
- 33: Schneidstempel
- C: Schnittlinie für Ausschnitt
- C': vorgesehene Schnittlinie für Ausschnitt
- DLR: Durchlaufrichtung
- H: erwärmter bzw. zu erwärmender lokaler Bereich
- V: (taktweiser) Vorschub

## Patentansprüche

1. Verfahren zum Schneiden eines metallischen Werkstoffs, wobei der zu schneidende metallische Werkstoff in einem Schneidvorgang entlang wenigstens einer definierten Schnittlinie (12, 13) getrennt wird,
**dadurch gekennzeichnet, dass**
der zu schneidende metallische Werkstoff vor dem Schneidvorgang zumindest im Bereich (H) einer Schnittlinie (12, 13) erwärmt wird, so dass der metallische Werkstoff zumindest in diesem Bereich während des nachfolgenden Schneidvorgangs eine erhöhte Temperatur aufweist.

2. Verfahren nach Anspruch 1,
**dadurch gekennzeichnet, dass**
der metallische Werkstoff vor dem Schneidvorgang lokal im Bereich (H) einer Schnittlinie erwärmt wird, so dass der metallische Werkstoff in diesem Bereich (H) während des nachfolgenden Schneidvorgangs eine lokal erhöhte Temperatur aufweist.

3. Verfahren nach Anspruch 1 oder 2,
**dadurch gekennzeichnet, dass**
der zu schneidende metallische Werkstoff ein Blechwerkstoff ist und dass der Schneidvorgang ein Scherschneiden ist.

4. Verfahren nach Anspruch 3 oder 4,
**dadurch gekennzeichnet, dass**
der zu schneidende Blechwerkstoff eben ist.

5. Verfahren nach Anspruch 3 oder 4,
**dadurch gekennzeichnet, dass**
der zu schneidende Blechwerkstoff zu einem Blechformteil umgeformt ist.

6. Verfahren nach einem der vorausgehenden Ansprüche,
**dadurch gekennzeichnet, dass**
die erhöhte Temperatur im betreffenden Bereich (H) beim Schneidvorgang zwischen 50 °C und 150 °C, bevorzugt zwischen 70 °C und 130 °C und insbesondere zwischen 90 °C und 110 °C beträgt.

7. Verfahren nach einem der vorausgehenden Ansprüche und insbesondere nach Anspruch 6,
**dadurch gekennzeichnet, dass**
der zu schneidende metallische Werkstoff im betreffenden Bereich (H) auf eine Temperatur erwärmt wird, die oberhalb der erhöhten Temperatur beim Schneidvorgang liegt.

8. Verfahren nach einem der vorausgehenden Ansprüche,
**dadurch gekennzeichnet, dass**
die Temperaturhaltezeit, innerhalb derer der betreffende Bereich (H) eine erhöhte Temperatur aufweist, möglichst kurz eingestellt wird.

9. Verfahren nach Anspruch 8,
**dadurch gekennzeichnet, dass**
der betreffende Bereich (H) nach dem Schneidvorgang keine erhöhte Temperatur mehr aufweist.

10. Verfahren nach Anspruch 8 oder 9,
**dadurch gekennzeichnet, dass**
der betreffende Bereich (H) nach dem Schneidvorgang gezielt gekühlt wird.

11. Schneidvorrichtung (20, 20') für einen metallischen Werkstoff, umfassend ein Schneidwerkzeug (30) zum Schneiden des metallischen Werkstoffs, wobei der zu schneidende metallische Werkstoff in einem Schneidvorgang entlang wenigstens einer definierten Schnittlinie (12, 13) getrennt wird,
**dadurch gekennzeichnet, dass**
die Schneidvorrichtung (20) ferner wenigstens eine Erwärmungseinrichtung umfasst, mittels derer der zu schneidende metallische Werkstoff vor dem Schneidvorgang zumindest im Bereich (H) einer Schnittlinie (12, 13) erwärmbar ist.

12. Schneidvorrichtung (20, 20')nach Anspruch 11,
**dadurch gekennzeichnet, dass**
die Erwärmungseinrichtung eine induktive Heizeinrichtung (25) ist.

13. Schneidvorrichtung (20') nach Anspruch 11 oder 12,
**dadurch gekennzeichnet, dass**
die Erwärmungseinrichtung in das Schneidwerkzeug (30) integriert ist.

14. Schneidvorrichtung (20, 20') nach einem der Ansprüche 11 bis 13,
**dadurch gekennzeichnet, dass**
diese eine Steuereinrichtung (26) für die Erwärmungseinrichtung umfasst.

15. Verwendung eines Verfahrens und/oder einer Schneidvorrichtung (20, 20') gemäß einem der vorausgehenden Ansprüchen zur Serienfertigung von Blechformteilen aus einem Stahlblechwerkstoff für Kraftfahrzeuge.
